# EUROPEAN PATENT SPECIFICATION

(11) **EP 0 462 105 B1**
(45) Date of publication and mention of the grant of the patent: **19.05.1993**
(21) Application number: 89909726.5
(22) Date of filing: 09.08.1989
(51) Int. Cl.: B29C 65/20

(54) **A METHOD AND AN APPARATUS FOR WELDING TOGETHER PLASTICS FOIL STRIPS**
VERFAHREN ZUM ZUSAMMENSCHWEISSEN ZWEIER KUNSTSTOFFBÄNDER
PROCEDE ET APPAREIL SERVANT A SOUDER ENSEMBLE DES BANDES DE FEUILLES PLASTIQUES

(30) Priority: 15.02.1989 DK 689/89
(43) Date of publication of application: 27.12.1991
(73) Proprietor: COLOPLAST A/S, DK-2980 Kokkedal (DK); BISGAARD, Hans Flinker, DK-8361 Hasselager (DK)
(72) Inventor: BISGAARD, Hans Flinker, DK-8361 Hasselager (DK)
(74) Representative: Raffnsöe, Knud Rosenstand
(86) International application number: DK8900189
(87) International publication number: WO9009270

(56) References cited:
- DE-C- 3 640 187
- GB-A- 2 082 500
- US-A- 2 387 566
- US-A- 4 146 419

## Description

This invention relates to a method for welding together two webs of plastics foil along a welding line or in a welding zone by heating action on the foil webs by means of one or more heating elements which are brought into pressure contact with one or both foil webs, whereby the heating action in said welding line or zone is carried out during synchronous movement of the foil webs by bringing the sides of the webs that are to face each other into pressure contact with heating elements provided in guiding surfaces for the foil webs, e.g. for the manufacture of closed bag items.

In connection with numerous different productions it is a more or less fondamental task to weld together foil webs along a continuous line or zone, e.g. in order to close a top or bottom edge area of a double web from which the bag items now welded together may be successively cut off by transverse cutting. Conventionally, the welding attachment is carried out in that an appropriately heated welding jaw presses the foils, which are in contact with each other, against an appropriate counterpart this pressure being exerted exactly in the area where the jaw at the same time produces such a heating that the foils are melted together. It is further known to use heated welding rollers capable of providing the welding during continuous passage of the foil webs.

In order to obtain a high quality welding the process must be controlled quite exactly because the fact that the heating of the proper welding area must take place through the foil layer against which the welding tool presses makes this process difficult. This also sets narrow limits to the welding speed since a quick welding requires a high temperature of the welding tool so as to quickly distribute the heat to the welding area, but at such a high temperature of the tool the external side of the foil is exposed to excessive melting, which normally should be avoided.

From US-A-2 387 566 and 4 146 419, DE-C2-3 640 187 and GB-A-2 082 500 some of the drawbacks of conventional prior art welding methods as described above have been avoided by exerting the heating action against the sides of the two webs facing each other and intended to be welded together by means of wedge shaped heating elements introduced between the foil webs or overlapping parts thereof. The foil webs as overlapping parts thereof are brought into pressure contact with the heating elements by means of rollers acting on the external sides of the two webs.

However since by this welding method the guiding surfaces provided by the wedge shaped element are stationary during movement of the foil webs it is only possible to provide welding along a linear seam extending in the direction of movement of the webs and unavoidably the friction between the wedge shaped element and the foil webs limits the working speed that can be used.

It is the object of the invention to provide a welding method of the kind described in which these drawbacks are eliminated so that any desired configuration of welding lines including lines not extending in the direction of movement can be obtained and, simultaneously, the risk of damaging the webs due to friction with a heated stationary guiding surface has been removed and the working speed can be considerably increased.

By the method according to the invention this is accomplished in that by said synchronous movement the foil webs are conveyed over two opposite rollers rotating synchronously with opposite directions of revolution and forming the guiding surfaces in which said heating elements are provided, subsequent to which the foil webs are immediately attached to each other by a pressure action exerted by at least one pair of counter rotating pressure rollers arranged downstream of the guiding surfaces.

It is thus possible to accelerate the working speed quite considerably while obtaining a high quality welding, because the material is heated to melt locally precisely In the welding area without the heat being transmitted trough the foil. It is even so that the heating action can be controlled in a less critical manner the higher the conveying speed is, so that a rather high working temperature may be used without getting completely through the respective foils. In principle optimum working conditions have therefore been provided for, namely an intense melting of the welding zones facing each other so as to allow the welding to be performed by a slight compression of the webs without this giving rise to separating problems in connection with the compression itself since the melting area does not extend completely to the external side of the foils. A high working speed also means that the period between the final heating and the compression of the webs is short which implies that the welding temperature neigther is essentially lowered nor gets through to the external side of the foil.

An apparatus designed to carry out this method and including means for conveying the foil webs and one or more heating elements for imposing a heating action of the foil webs by pressure contact, said heating elements being provided in a guiding surface for each foil web, is characterized in that said guiding surfaces are formed by two opposite rollers rotating synchronously with opposite directions of revolution, the conveying means being designed to guide each foil web past said guiding surface with the side intended to face the other foil web in engagement with the guiding surface, and in that attachment means arranged downstream of the guiding surfaces comprises at least one pair of counter rotating pressure rollers for attaching the foil webs to each other by pressure action.

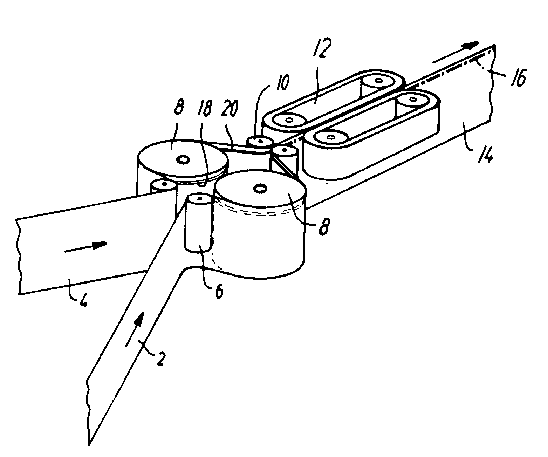

The invention will now be described further with reference to the drawing which is a schematic perspective view of an apparatus for the execution of a welding action according to the invention.

The apparatus is supplied with two foil webs 2 and 4 from supply rolls (not shown), but these webs may also be two sides of one single web folded in V-shape at its lower part. The webs are introduced around respective guiding rollers 6 wherefrom they are guided outwardly to partly entwine the larger rollers 8 wherefrom they are led towards each other so as to be conveyed together through a pair of compression rollers 10 and preferably then through a pair of opposite rolling belts 12 wherefrom they are finally conveyed in the form of a double layer web 14, e.g. welded together along a top welding line 16. This double web may then in a manner not shown be exposed to a transverse cutting by welding so as to form successive bag items.

The wide rollers 8 are at the top provided with heating means along a narrow circumferential belt 18 so that both of the foil webs 2 and 4 during their passage through the apparatus are heated along the lines indicated by 20 on the sides of the foils facing each other. As mentionned above, the passage may be quick so that the heating can be controlled so as to provide a local melting or considerable smoothing of the foil material at said inner sides of the webs, without the associated high temperature reaching the external side of the foils before these are brought together between the rollers 10.

By this attachment the melting areas 20 are pressed against each other to create a welding along the welding line 16. The rollers 10 have a cooling effect on the external sides of the foil webs so as to prevent a melting through of the foils. This cooling or heat-absorbing effect may also be obtained by the pressure belts 12 so that when using such belts an extra security is provided against a melting through of the foil webs and assuring that they are kept effectively together until the material in the melting zones 20 has hardened to complete the welding.

It will be possible to expose the foil webs to an active cooling on their external sides during the passage around the rollers 8 whereby the heating along the roller zones 18 can be very considerable without a melting through of the webs which allows an extra high conveying speed.

The invention involves important consequences not only concerns the choice of material since this invention allows the control of a very quick welding of polyethylene foils whereas until now when high production speeds have been requested it has only been possible to use less attractive PVC foils.

Without difficulty various construction elements may by provided between the welded areas of the foil webs, such as connection hoses for the manufactured bag items since the respective rollers 8, 10 and possible belt 12 may be designed with recesses for accomodating such elements. In the case of connection hoses for liquidtight connection with the bag items, e.g. for urine or stomi bags, the hose ends may be preheated before being inserted in these recesses whereby a safe welding to the welding zones 20 in the foil webs is made possible.

## Claims

1. A method for welding together two webs (2,4) of plastics foil along a welding line (16) or in a welding zone by heating action on the foil webs by means of one or more heating elements which are brought into pressure contact with one or both foil webs, whereby the heating action in said welding line (20) or zone is carried out during synchronous movement of the foil webs (1,2) by bringing the sides of the webs that are to face each other into pressure contact with heating elements provided in guiding surfaces for the foil webs, characterized in that by said synchronous movement the foil webs are conveyed over two opposite rollers (8) rotating synchronously with opposite directions of revolution and forming the guiding surfaces in which said heating elements are provided, subsequent to which the foil webs are immediately attached to each other by a pressure action exerted by at least one pair of counter rotating pressure rollers arranged downstream of the guiding surfaces.

2. A method as claimed in claim 1, characterized in that the heating action and the subsequent attachment are performed during continuous movement of the foil webs (1,2).

3. A method as claimed in claim 1 or 2, characterized in that during the attachment, cooling is provided of the external sides of the foil webs.

4. A method as claimed in claim 1, 2 or 3, characterized in that in connection with the attachment construction elements such as connection hoses are inserted between two zones of the foil webs welded to each other.

5. An apparatus for welding together two webs of plastics foil using the method according to claims 1-4, which apparatus includes means for conveying the foil webs and one or more heating elements for imposing a heating action of the foil webs by pressure contact, said heating elements being provided in a guiding surface for each foil web (1,2) characterized in that said guiding surfaces are formed by two opposite rollers (8) rotating synchronously with opposite directions of revolution, the conveying means (6) being designed to guide each foil web (1,2) past said guiding surface with the side intended to face the other foil web in engagement with the guiding surface, and in that attachment means (10) arranged downstream of the guiding surfaces comprises at least one pair of counter rotating pressure rollers for attaching the foil webs to each other by pressure action.

6. Apparatus as claimed in claim 5, characterized in that the attachment means comprises means for cooling the external sides of the webs.

7. An apparatus as claimed in claims 5 and 6, characterized in that said pair of pressure rollers (10) are designed with recesses for accomodating of a construction element such as a connection hose between the two supplied foil webs.

## Patentansprüche

1. Verfahren zum Zusammenschweissen zweier Bahnen (2, 4) von Kunststoffolien entlang einer Schweisslinie (16) oder in einer Schweisszone durch Wärmeeinwirkung auf die Folienbahnen mittels einem oder mehrerer Heizelemente, die mit der einen oder beiden Folienbahnen in Anpresskontakt gebracht werden, wobei die Wärmeeinwirkung in erwähnter Schweisslinie (20) oder Schweisszone während synchroner Bewegung der Folienbahnen (1, 2) durchgführt wird, wobei die einander zuwendenden Seiten der Folienbahnen mit in Führungsflächen für die Folienbahnen vorgesehenen Heizelementen in Druckkontakt gebracht werden, dadurch **gekennzeichnet**, dass bei der synchronen Bewegung die Folienbahnen über zwei gegenüberliegende und in entgegengesetzter Umlaufrichtung synchron rotierende Walzen (8), welche die Führungsflächen für die darin vorgesehenen Heizelemente bilden, geleitet werden, wonach die Folienbahnen unter Druckeinfluss von zumindest einem stromabwärts der Führungsflächen angeordneten, entgegengesetzt rotierenden Druckrollenpaar sofort zusammengefügt werden.

2. Verfahren nach Anspruch 1, dadurch **gekennzeichnet**, dass die Wärmeeinwirkung und das darauffolgende Zusammenfügen unter kontinuierlichem Vorschub der Folienbahnen (1, 2) durchgeführt wird.

3. Verfahren nach Anspruch 1 oder 2, dadurch **gekennzeichnet**, dass während des Zusammenfügens ein Abkühlen der Aussenseiten der Folienbahnen erfolgt.

4. Verfahren nach Anspruch 1, 2 oder 3, dadurch **gekennzeichnet**, dass in Verbindung mit dem Zusammenfügen Konstruktionselemente, wie z.B. Verbindungsschläuche, zwischen zwei zusammengeschweissten Zonen der Folienbahnen eingesetzt werden.

5. Vorrichtung zum Zusammenschweissen zweier Kunststoffolienbahnen bei Verwendung des Verfahrens nach einem der Ansprüche 1-4, welche Vorrichtung Mittel zum Befördern der Folienbahnen sowie ein oder mehrere Heizelemente zur Ausübung einer Wärmeinwirkung auf die Folienbahnen durch Druckkontakt aufweist, welche Heizelemente in einer für jede Folienbahn vorgesehenen Führungsfläche angordnet sind, dadurch **gekennzeichnet**, dass die Führungsflächen von zwei gegenüberliegenden, in entgegengesetzter Umlaufrichtung synchron rotierenden Walzen (8) gebildet sind, dass die Beförderungsmittel (6) so eingerichtet sind, dass sie jede Folienbahn (1, 2) an der erwähnten Führungsfläche mit jener Seite, die dazu vorgesehen ist der anderen Folienbahn zuzuwenden, in Eingriff mit der Führungsfläche vorbeiführt, und dass das stromabwärts der Führungsflächen angeordnete Zusammenfügungsorgan (10) zumindest ein Paar entgegengesetzt rotierender Druckrollen zum Zusammenpressen der Folienbahnen unter Druckeinfluss umfasst.

6. Vorrichtung nach Anspruch 5, dadurch **gekennzeichnet**, dass das Zusammenfügungsorgan Mittel zum Abkühlen der Aussenseiten der Bahnen umfasst.

7. Vorrichtung nach Anspruch 5 und 6, dadurch **gekennzeichnet**, dass das erwähnte Druckrollenpaar (10) mit Aussparungen zur Aufnahme eines zwischen den zwei zugeführten Folienbahnen eingesetzten Konstruktionselements, z.B. eines Verbindungsschlauchs, ausgebildet ist.

## Revendications

1. Procédé pour souder ensemble deux bandes (2,4) de feuille plastique le long d'une ligne de soudure ou dans une zone de soudure, par effet de chauffage des bandes de feuille à l'aide d'un ou plusieurs éléments de chauffage amenés en contact sous pression avec l'une de ces bandes ou avec les deux bandes de feuille, l'effet de chauffage dans ladite ligne de soudure (20) ou dans ladite zone étant appliqué pendant un mouvement synchrone des bandes de feuille (2,4) en amenant les cotés des bandes destinés à faire face l'un à l'autre en contact sous pression avec les éléments de chauffage prévus dans des surfaces de guidage des bandes de feuille, caractérisé en ce que par ce mouvement synchrone, les bandes de feuille sont convoyées sur deux rouleaux opposés (8) qui tournent en synchronisme dans des sens de rotation opposés et forment les surfaces de guidage dans lesquelles lesdits éléments de chauffage sont prévus, après quoi les bandes de feuille sont immédiatement réunies l'une à l'autre sous un effet de pression exercé par au moins une paire de rouleaux contrarotatifs de pression situés en aval des surfaces de guidage.

2. Procédé selon la revendication 1, caractérisé en ce que l'effet de chauffage et la réunification consécutive ont lieu sous mouvement continu des bandes de feuille (2,4).

3. Procédé selon les revendicatiobs 1 ou 2, caractérisé en ce que durant la réunification, on assure un refroidissement des faces externes des bandes de feuille.

4. Procédé selon les revendications 1, 2 ou 3, caractérisé en ce qu'en liaison avec la réunification, des éléments de construction tels que des tubes de branchement sont insérés entre deux zones des bandes de feuille soudées l'une à l'autre.

5. Appareil pour souder ensemble deux bandes de feuille plastique par mise en oeuvre du procédé selon les revendications 1 à 4, ledit appareil comportant des moyens de transport des bandes de feuille et un ou plusieurs éléments de chauffage imposant un effet de chauffage aux bandes de feuille sous pression de contact, lesdits éléments de chauffage étant prévus dans des surfaces de guidage de chaque bande de feuille (2,4), caractérisé en ce que lesdites surfaces de guidage sont constituées par deux rouleaux opposés (8) tournant en synchronisme dans des sens opposés de rotation, les moyens de transport (6) étant conçus pour guider chaque bande de feuille (2,4) passant sur ladite surface de guidage, avec son coté, destiné à faire face à l'autre bande de feuille, en appui contre la surface de guidage, et en ce que des moyens de réunification (10) situés en aval des surfaces de guidage sont constitués par au moins une paire de rouleaux presseurs contrarotatifs pour la réunification des bandes de feuille l'une avec l'autre sous un effet de pression.

6. Appareil selon la revendication 5, caractérisé en ce que les moyens de réunification comportent des moyens de refroidissement des faces externes des bandes.

7. Appareil selon les revendications 5 ou 6, caractérisé en ce qu'une paire de rouleaux presseurs (10) sont conçus avec des évidements de logement d'un élément de construction tel qu'un tube de branchement entre les deux bandes de feuille alimentées.
